# EUROPÄISCHE PATENTSCHRIFT

(11) **EP 0 453 778 B1**
(45) Veröffentlichungstag und Bekanntmachung des Hinweises auf die Patenterteilung: **10.05.1995**
(21) Anmeldenummer: 91104585.4
(22) Anmeldetag: 23.03.1991
(51) Int. Cl.: G01D 5/38

(54) **Winkelmesseinrichtung**
Angle measuring device
Codeur angulaire

(30) Priorität: 27.04.1990 DE 4013566
(43) Veröffentlichungstag der Anmeldung: 30.10.1991
(73) Patentinhaber: Dr. Johannes Heidenhain GmbH, D-83292 Traunreut (DE)
(72) Erfinder: Franz, Andreas, Dr., W-8221 Kienberg (DE)

(56) Entgegenhaltungen:
- EP-A- 0 262 349
- EP-A- 0 365 806
- EP-A- 0 401 654
- DE-C- 3 901 534

## Beschreibung

Die Erfindung betrifft eine lichtelektrische Winkelmeßeinrichtung wie sie auch in der EP-A- 0 365 806 (veröffentlicht 02. 05. 90), sowie in der EP-A- 0 401 654 (veröffentlicht 12. 12. 90) beschrieben ist.

Derartige Winkelmeßeinrichtungen werden insbesondere bei Bearbeitungsmaschinen zur Messung der Relativlage eines Werkzeugs bezüglich eines zu bearbeitenden Werkstückes eingesetzt.

Eine einfach aufgebaute und damit preiswert herzustellende Winkelmeßeinrichtung mit geringen Abmessungen ist in der DE-C2- 36 33 574 beschrieben. Die dort offenbarte Winkelmeßeinrichtung ist unempfindlich gegen Taumelfehler des Teilungsträgers und Exzentrizitätsfehler werden eliminiert.

Ein integriert-optischer Drehgeber benötigt Koppelgitter, die die an der Meßankörperung gebeugten Strahlenbündel korrekt in geeignete Wellenleiter-Strukturen einkoppeln. Die Form der Gitterlinien solcher Koppelgitter wird durch komplizierte mathematische Ausdrücke beschrieben. Aufgrund der extremen Feinheit dieser Koppelgitter (Gitterkonstante < 0.5 »m) lassen sich diese nur unter äußersten Schwierigkeiten mit der erforderlichen Genauigkeit herstellen.

Der vorliegenden Erfindung liegt die Aufgabe zugrunde, eine Winkelmeßeinrichtung der eingangs genannten Art zu schaffen, bei der die Koppelelemente für die Einkopplung und/oder Auskopplung gebeugter Strahlenbündel in integriert-optische Strukturen einfacher herstellbar sind.

Diese Aufgabe wird von einer Winkelmeßeinrichtung mit den Merkmalen des Anspruches 1 gelöst.

Die Vorteile der Erfindung liegen in der - durch die Auflösung komplizierter Koppelelemente in jeweils zwei einfache Gitter - unproblematischen Fertigung der Abtasteinrichtung für die Winkelmeßeinrichtung.

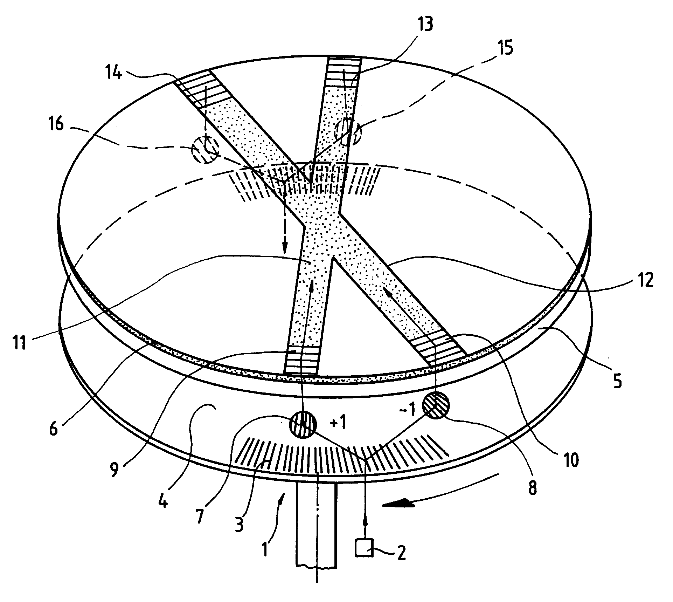

Mit Hilfe einer stark schematisierten Darstellung wird die Erfindung anhand der Zeichnung noch näher erläutert.

Bei einer in der Figur schematisch dargestellten Winkelmeßeinrichtung 1 fällt an einem ersten Abtastbereich Licht eines Lasers 2 auf eine Kreisteilung 3 einer Teilscheibe 4. An der als Phasengitter ausgebildeten Kreisteilung 3 wird das Licht gebeugt und zwei Teilstrahlenbündel +1 und -1 erster Beugungsordnung werden erzeugt. Weitere Beugungsordnungen werden nicht ausgewertet.

Eine nicht näher bezeichnete Abtasteinrichtung weist ein Substrat 5 auf, welches eine monolithisch integrierte optische Struktur 6 trägt.

Die durch Beugung am Phasengitter der Kreisteilung 3 erzeugten Teilstrahlenbündel +1 und -1 der positiven ersten Beugungsordnung und der negativen ersten Beugungsordnung treffen auf Korrekturgitter 7 und 8 von denen sie so abgelenkt werden, daß sie senkrecht und mit gerader Wellenfront in das Substrat 5 eintreten. Die Korrekturgitter 7 und 8 können auf der Unterseite des Substrates 5 angeordnet sein und weisen eine ganz einfache Gitterstruktur, unter Umständen sogar die der radialen Kreisteilung 3 auf. Die Korrekturgitter 7 und 8 weisen Gitterkonstanten in der Größenordnung wie die Kreisteilung 3 ( 5»m) auf und lassen sich relativ einfach herstellen. Die von den Korrekturgittern 7 und 8 abgelenkten Teilstrahlenbündel +1 und -1 treffen in der integriert-optischen Struktur 6 auf Einkoppelgitter 9 und 10, die als einfache Linear- oder Zirkulargitter ausgebildet sind. Durch die Einkoppelgitter 9 und 10 werden die Teilstrahlenbündel +1 und -1 in Schichtwellenleiter 11 und 12 eingespeist und zu diametral angeordneten Auskoppelgittern 13 und 14 geleitet.

Die Auskoppelgitter 13 und 14 lenken die Teilstrahlenbündel +1 und -1 über weitere Korrekturgitter 15 und 16 wieder auf die Kreisteilung 3, wo sie zur Interferenz gebracht und von nicht dargestellten Detektoren erfaßt werden. Aufgrund der Relativbewegungen zwischen dem Substrat 5 und der Teilscheibe 4 ändern sich in bekannter Weise die Phasenlagen der an der Kreisteilung 3 zweimal gebeugten Strahlenbündel, so daß von den Detektoren Signale erzeugt werden, deren Perioden einem Viertel der Teilungsperiode der Kreisteilung 3 entsprechen.

Durch die doppelte Abtastung an diametralen Abtastbereichen wird - falls vorhanden - Exzentrizität eliminiert.

Die in dem Ausführungsbeispiel gezeigte Bauform und geometrische Anordnung sind selbstverständlich stark schematisiert, da sich die tatsächlichen Verhältnisse in optisch-integrierten Bausteinen zeichnerisch kaum realistisch darstellen lassen.

Abweichend vom erläuterten Ausführungsbeispiel müssen die erwähnten Gitter nicht als Phasengitter ausgebildet sein, dies ist nur eine bevorzugte Ausführungsform.

## Patentansprüche

1. Lichtelektrische Winkelmeßeinrichtung (1) interferentieller Art, mit einem eine Kreisteilung (3) tragenden Teilungsträger (4), einer Abtasteinrichtung mit integriert-optischer Struktur (6) auf einem Substrat (5) zum Abtasten der Kreisteilung (3), und Koppelelementen (9, 10 bzw. 13, 14) zum Ein- und/oder Auskoppeln von gebeugten Strahlenbündeln in die und/oder aus der integriert-optischen Struktur (6), wobei die lichtelektrische Meßeinrichtung eine Winkelmeßeinrichtung (1) mit diametraler Abtastung der Kreisteilung (3) ist, den Koppelelementen (9, 10 bzw. 13, 14) zu ihrer Vereinfachung jeweils ein weiteres Gitter (7, 8 bzw. 15, 16) zugeordnet ist und wobei das weitere Gitter (7, 8 bzw. 15, 16) so ausgebildet ist, daß ein ein- und/oder auszukoppelndes Strahlenbündel (+1, -1) senkrecht und mit gerader Wellenfront in das und/oder aus dem Substrat (5) ein- und/oder austritt.

2. Lichtelektrische Winkelmeßeinrichtung interferentieller Art nach Anspruch 1, dadurch gekennzeichnet, daß das weitere Gitter (7) so ausgebildet ist, daß ein einzukoppelndes Strahlenbündel (+1) senkrecht und mit gerader Wellenfront auf das als Lineargitter (9) ausgebildete Einkoppelgitter fällt.

3. Lichtelektrische Winkelmeßeinrichtung interferentieller Art nach Anspruch 1, dadurch gekennzeichnet, daß das weitere Gitter (7) als ein mit dem Radialgitter der Kreisteilung (3) identisches Gitter ausgebildet ist.

## Claims

1. A photoelectric angle measuring device (1) of interferometric kind, with a scale carrier (4) carrying a circular scale (3), a sensing device with an integrated optical structure (6) on a substrate (5) for sensing the circular scale (3) and coupling elements (9, 10 or 13, 14) for coupling in and/or out diffracted bundles of rays into and/or out of the integrated optical structure (6), wherein the photoelectric measuring device is an angle measuring device (1) with diametrical sensing of the circular scale (3), a further grating (7, 8 or 15, 16) is associated with each of the coupling elements (9, 10 or 13, 14) to simplify the same, and wherein the further grating (7, 8 or 15, 16) is so formed that a bundle of rays (+1, -1) coupled in and/or out enters and/or emerges perpendicular to the substrate (5) and with a straight wavefront.

2. A photoelectric angle measuring device of interferometric kind according to claim 1, characterized in that the further grating (7) is so formed that a ray bundle (+1) to be coupled in falls perpendicularly and with a straight wavefront on to the coupling-in grating formed as a linear grating (9).

3. A photoelectric angle measuring device of interferometric kind according to claim 1, characterized in that the further grating (7) is formed as a grating identical to the radial grating of the circular scale (3).

## Revendications

1. Dispositif photo-électrique (1) de mesure d'angles de type interférentiel, comportant un support de graduation (4) qui porte une graduation (3) circulaire, un dispositif de lecture avec une structure (6) optique intégrée sur un support (5) pour la lecture de la graduation (3) circulaire et des éléments de couplage (9, 10 ou 13, 14) pour envoyer et/ou extraire des faisceuax de rayons diffractés dans et/ou de la structure (6) optique intégrée, le dispositif photo-électrique (1) étant un dispositif de mesure d'angles avec une lecture diamétrale de la graduation angulaire (3), un réseau (7, 8 ou 15, 16) additionnel étant associé chaque fois aux éléments de couplage (9, 10 ou 13, 14) aux fins de simplifier ceux-ci et le réseau (7, 8 ou 15, 16) additionnel étant agencé de manière telle qu'un faisceau de rayons (+1, -1) à introduire et/ou à extraire entre et/ou sorte dans et/ou du substrat (5) perpendiculairement et avec un fiont d'onde rectiligne.

2. Dispositif photo-électrique de mesure d'angles de type par interférométrie selon la revendication 1, caractérisé par le fait que le réseau additionnel (7) est agencé de manière telle qu'un faisceau de rayons (+1) à introduire arrive perpendiculairement et avec un front d'onde rectiligne sur le réséeau de couplage agencé sous forme de réseau linéaire (9).

3. Dispositif photo-électrique de mesure d'angles de type interférentiel selon la revendication 1, caractérisé par le fait que le réseau additionnel (7) est agencé sous la forme d'un réseau identique au réseau radial dela graduation angulaire (3).
